# FASCICULE DE BREVET EUROPEEN

(11) **EP 2 013 551 B1**
(45) Date de publication et mention de la délivrance du brevet: **21.07.2010**
(21) Numéro de dépôt: 07731398.9
(22) Date de dépôt: 02.05.2007
(51) Int. Cl.: F25B 37/00, F25B 39/02

(54) **ENSEMBLE EVAPORATEUR/ABSORBEUR, DISPOSITIF DE REFROIDISSEMENT PAR ABSORPTION ET VEHICULE AUTOMOBILE ASSOCIES**
VERDAMPFER-/ABSORBER-KOMBINATION, ABSORPTIONSKÜHLVORRICHTUNG UND ZUGEHÖRIGES KRAFTFAHRZEUG
EVAPORATOR/ABSORBERS COMBINATION, ABSORPTION COOLING DEVICE AND ASSOCIATED MOTOR VEHICLE

(30) Priorité: 02.05.2006 FR 0651568
(43) Date de publication de la demande: 14.01.2009
(73) Titulaire: Peugeot Citroën Automobiles SA, 78140 Vélizy-Villacoublay (FR); Ecoclim SA, 1950 Sion (CH)
(72) Inventeur: COSSENET, Michel, 91330 Yerres (FR); BOUDARD, Emmanuel, 78960 Voisins Le Bretonneux (FR); GERARD, Fabien, 78140 Velizy Villacoublay (FR); BRUZZO, Vital, 36040 Vicenza (IT)
(74) Mandataire: Blot, Philippe Robert Emile
(86) Numéro de dépôt international: PCT/FR2007/000749
(87) Numéro de publication internationale: WO 2007/125221

(56) Documents cités:
- EP-A1- 1 160 530
- DE-C- 469 735
- FR-A- 2 871 221
- JP-A- 5 340 637
- JP-A- 2004 176 969
- JP-A- 2004 340 468

## Description

La présente invention concerne un ensemble évaporateur/absorbeur selon le préambule de la revendication 1.

Un ensemble évaporateur/absorbeur du type précité est destiné à être disposé dans un dispositif de refroidissement par absorption placé dans un véhicule automobile pour fournir les frigories nécessaires à la climatisation de ce véhicule.

On connaît de WO-A-01/18463 et de FR 2871 221, un dispositif de refroidissement par absorption comprenant un générateur, dans lequel un fluide mixte comprenant un fluide réfrigérant et un fluide absorbant est séparé pour obtenir un courant gazeux de fluide réfrigérant, et un courant liquide de fluide absorbant.

Ce dispositif comprend en outre un condenseur de fluide réfrigérant qui reçoit le courant gazeux et qui permet de reliquéfier le fluide réfrigérant. Ce dispositif comprend un évaporateur de fluide réfrigérant raccordé au condenseur, dans lequel le fluide réfrigérant liquide provenant du condenseur est vaporisé au moyen d'un gicleur. Cette vaporisation produit des frigories qui sont utilisées en vue de la réfrigération, par l'intermédiaire d'un circuit de réfrigération placé en relation d'échange thermique avec un climatiseur.

Le fluide réfrigérant évaporé est alors convoyé jusqu'à un absorbeur qui reçoit un courant liquide de fluide absorbant. Le courant liquide est pulvérisé dans l'absorbeur pour former de très fines gouttelettes qui absorbent le fluide réfrigérant évaporé.

Un liquide mixte comprenant le fluide réfrigérant et le fluide absorbant est alors collecté dans le fond de l'absorbeur pour être convoyé jusqu'au générateur.

Un tel dispositif produit de manière efficace des frigories pouvant être utilisées dans un ensemble de climatisation, sans l'utilisation d'un fluide réfrigérant nuisible pour l'environnement.

Toutefois, si l'on installe sur un véhicule automobile un dispositif du type précité, les accélérations et les inclinaisons du véhicule tendent à perturber le gicleur de transfert. Par ailleurs, un tel dispositif est encombrant et peu ergonomique.

Un but de l'invention est donc de fournir un ensemble évaporateur/absorbeur pour un dispositif de refroidissement par absorption, qui peut être facilement implanté sur un véhicule, de manière compacte, tout en présentant un fonctionnement fiable.

A cet effet, l'invention a pour objet un ensemble évaporateur/absorbeur selon la revendication 1.

L'ensemble selon l'invention peut comprendre l'une ou plusieurs des caractéristiques des revendications 2 à 17.

L'invention a également pour objet un dispositif de refroidissement par absorption selon la revendication 18.

L'invention a en outre pour objet un véhicule automobile selon la revendication 19.

L'invention sera mieux comprise à la lecture de la description qui va suivre, donnée uniquement à titre d'exemple, et faite en se référant aux dessins annexés sur lesquels :
- la Figure 1 est un schéma synoptique fonctionnel d'un premier dispositif de refroidissement selon l'invention ;
- la Figure 2 est une vue en coupe suivant un plan vertical médian d'un premier ensemble évaporateur/absorbeur selon l'invention, placé dans le dispositif de la Figure 1 ;
- la Figure 3 est une vue agrandie d'un détail marqué III de la Figure 2;
- la Figure 4 est une vue partielle en coupe transversale suivant un plan vertical perpendiculaire au plan de coupe de la Figure 2 du boîtier de l'ensemble évaporateur/absorbeur de la Figure 2 ;
- la Figure 5 est une vue en coupe suivant le plan horizontal V-V d'un détail de la Figure 3.

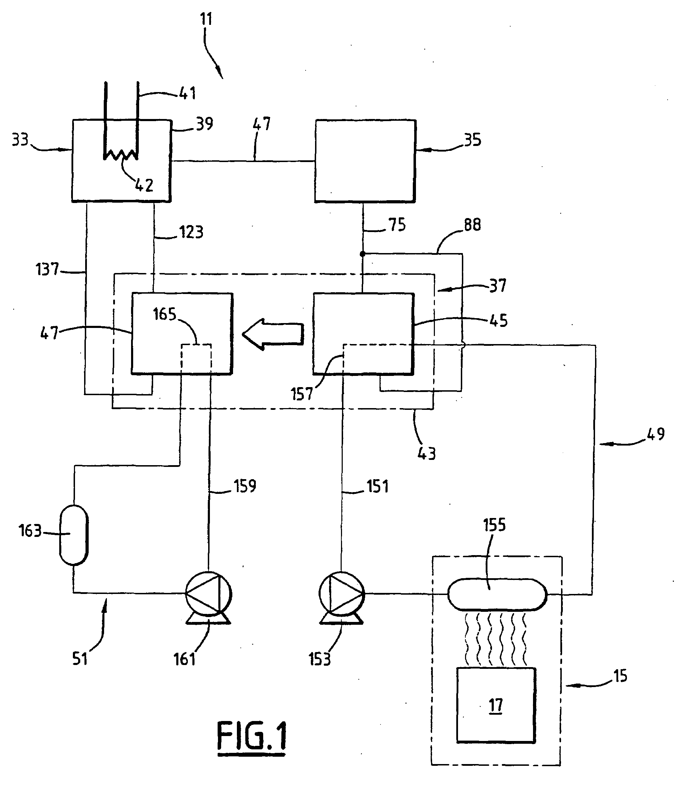

Le premier dispositif 11 de refroidissement par absorption selon l'invention, représenté sur la figure 1, est par exemple disposé dans un véhicule automobile. Le véhicule comprend notamment un habitacle 15 et un ensemble 17 de climatisation de l'habitacle mis en relation d'échange thermique avec le dispositif 11.

En référence à la figure 1, le dispositif 11 comprend un générateur 33 de fluide réfrigérant et de fluide absorbant par séparation d'un fluide mixte, un condenseur 35 de fluide réfrigérant évaporé et un ensemble évaporateurabsorbeur 37.

Le générateur 33 comprend une enceinte 39 destinée à recevoir le fluide mixte formé par un mélange de fluide réfrigérant liquide et de fluide absorbant liquide, et des moyens de chauffage 41.

Le fluide absorbant est par exemple formé par une solution de bromure de lithium et le fluide réfrigérant est formé par de l'eau.

En variante, le fluide absorbant est formé par de l'eau et le fluide réfrigérant par de l'ammoniaque.

Les moyens de chauffage 41 comprennent par exemple une conduite de circulation du liquide de refroidissement moteur comprenant une région 42 disposée dans l'enceinte 39 pour mettre en relation d'échange thermique le liquide de refroidissement moteur avec le fluide mixte contenu dans l'enceinte 39.

Le condenseur 35 est raccordé au générateur 33 par une conduite de passage 47 de fluide réfrigérant évaporé.

Le condenser 35 est disposé dans la face avant (non représentée) du véhicule sur le radiateur du liquide de refroidissement moteur, en amont par rapport au radiateur suivant le sens de circulation d'air dans la face avant.

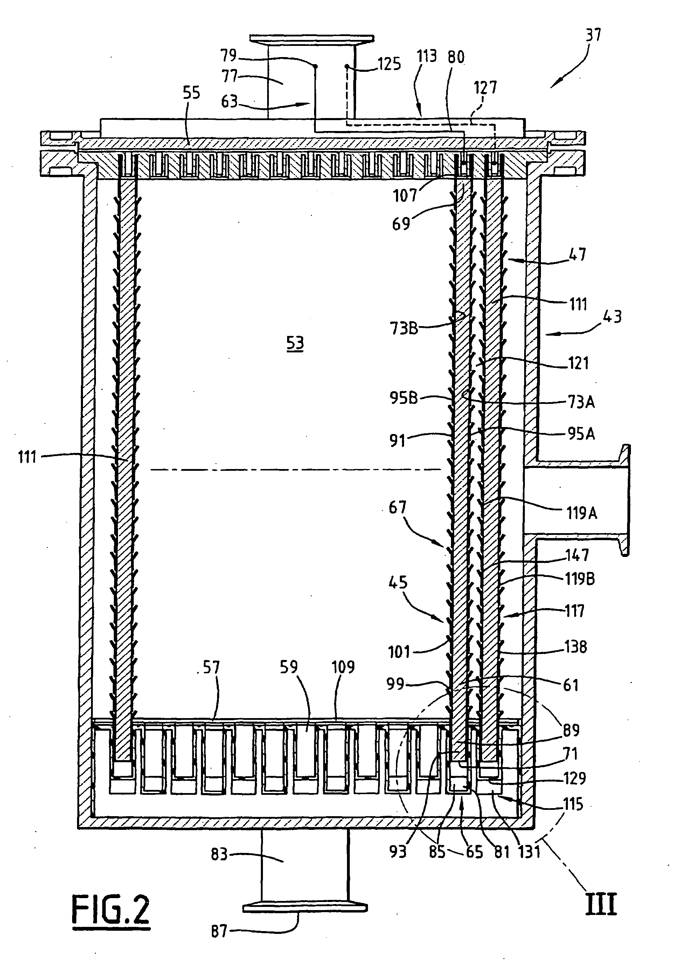

Comme illustré par la Figure 2, l'ensemble 37 comprend un boîtier étanche 43, un évaporateur à plaques 45 et un absorbeur à plaques 47 disposés dans le boîtier étanche 43. L'ensemble 37 comprend en outre, comme illustré par la Figure 1, un circuit de réfrigération 49 destiné à transmettre les frigories produites dans l'évaporateur 45 et un circuit de refroidissement 51 de l'absorbeur 47.

Le boîtier 43 est sensiblement de forme parallélépipédique. Il délimite un volume intérieur 53 obturé en haut par un couvercle 55, et en bas par une paroi de fond 57 fixée dans une partie inférieure du boîtier. La paroi de fond 57 est réalisée à base d'un matériau souple. La paroi 57 délimite une pluralité de fentes 59 de passage horizontales débouchant dans le volume intérieur 53.

L'évaporateur 45 comprend une pluralité de plaques poreuses 61, un distributeur 63 de fluide réfrigérant liquide pour alimenter les plaques 61 en amont, et un collecteur 65 de fluide réfrigérant liquide, pour recueillir le fluide réfrigérant liquide en aval de chaque plaque 61. L'évaporateur 51 comprend en outre des moyens 67 de blocage du refoulement de fluide réfrigérant liquide vers le volume intérieur 53.

Les plaques 61 sont disposées verticalement dans le volume intérieur 53 dans des plans parallèles espacés transversalement de gauche à droite sur la Figure 2. Pour simplifier le dessin, seule une plaque 61 a été représentée sur la Figure 2.

Chaque plaque 61 s'étend entre un bord amont supérieur 69 maintenu en appui contre le couvercle 55 et un bord aval inférieur 71 engagé dans le collecteur 65 à travers une fente 59 correspondante.

Chaque plaque 61 définit un volume comprenant essentiellement un corps poreux, par exemple, du type mousse à cellules ouvertes ou de type surface emboutie chaotique. Le corps poreux peut comporter une porosité sensiblement comprise entre 80 % et 99 % et préférentiellement de 93 %. Il peut également comporter une densité d'ouvertures comprise entre 8 pores par centimètre et 40 pores par centimètre et préférentiellement de 16 pores par centimètre. Enfin, le corps poreux peut comporter une densité brute comprise entre 0,01 g.cm⁻³ à 1 g.cm⁻³ et préférentiellement de 0,2 g.cm⁻³.

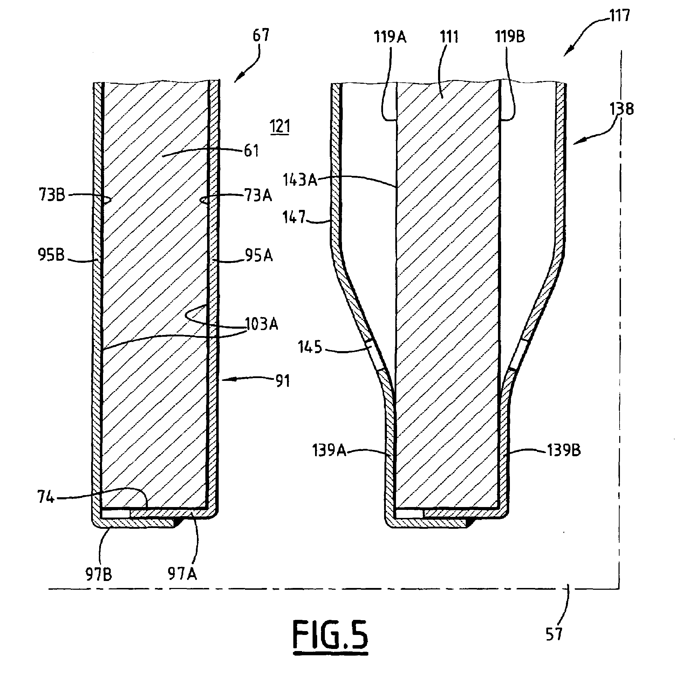

Chaque plaque 61 définit, de part et d'autre de son épaisseur, deux surfaces verticales planes de transfert de gaz 73A, 73B opposées. Chaque surface 73A, 73B s'étend dans le volume intérieur 53 entre le couvercle 55 et la paroi de fond 57. Les surfaces verticales 73A, 73B sont raccordées entre elles de part et d'autre de la plaque 61 par des surfaces latérales verticales 74 situées sur la tranche de chaque plaque 61, et représentées sur la Figure 5.

Les surfaces verticales 73A, 73B peuvent comporter un matériau spécifique capable de laisser passer les gaz tout en retenant les liquides. Elles peuvent comporter par exemple un grillage du type inoxydable à trous fins compris entre 0,01 mm et 1 mm de diamètre réalisés avec un fil compris entre 0,01 mm et 1 mm de diamètre. Le diamètre des trous fins est préférentiellement égal ou inférieur à 1 mm pour bénéficier des phénomènes de capillarité. Les surfaces verticales 73A, 73B peuvent également consister en une membrane de type GORE-TEX®, nylon, polyéthylène ou polypropylène. Enfin, il peut être envisagé que les surfaces verticales 73A, 73B résultent d'une modification locale du corps poreux de chaque plaque 61 sur environ 1 mm d'épaisseur en augmentant la densité de pores par centimètre jusqu'à par exemple 100 pores par centimètre et préférentiellement 50 pores par centimètre.

Le distributeur 63 est raccordé au condenseur 35 par une conduite 75 d'alimentation en fluide réfrigérant liquide représentée sur la Figure 1. Comme illustré par la Figure 2, il comprend un embout de raccordement 77 à la conduite 75 délimitant une entrée 79 d'alimentation de l'évaporateur 51 en fluide réfrigérant. Le distributeur 63 définit en outre une pluralité de canaux 80 ménagés dans le couvercle 55 et raccordant l'entrée 79 d'alimentation aux bords supérieurs 69 de chaque plaque 61.

Le collecteur 65 comprend, pour chaque plaque 61, un réceptacle 81 débouchant vers le haut par une ouverture de section horizontale sensiblement égale à la section horizontale d'une fente 59, et un embout 83 commun d'évacuation de fluide réfrigérant liquide.

Chaque réceptacle 81 est rapporté sous la paroi de fond 57 de manière, étanche par un joint collant.

L'ouverture supérieure du réceptacle 81 s'étend ainsi en regard d'une fente 59 correspondante, de sorte que chaque réceptacle 81 reçoit une région aval 89 de la plaque 61 au voisinage de son bord aval inférieur 71.

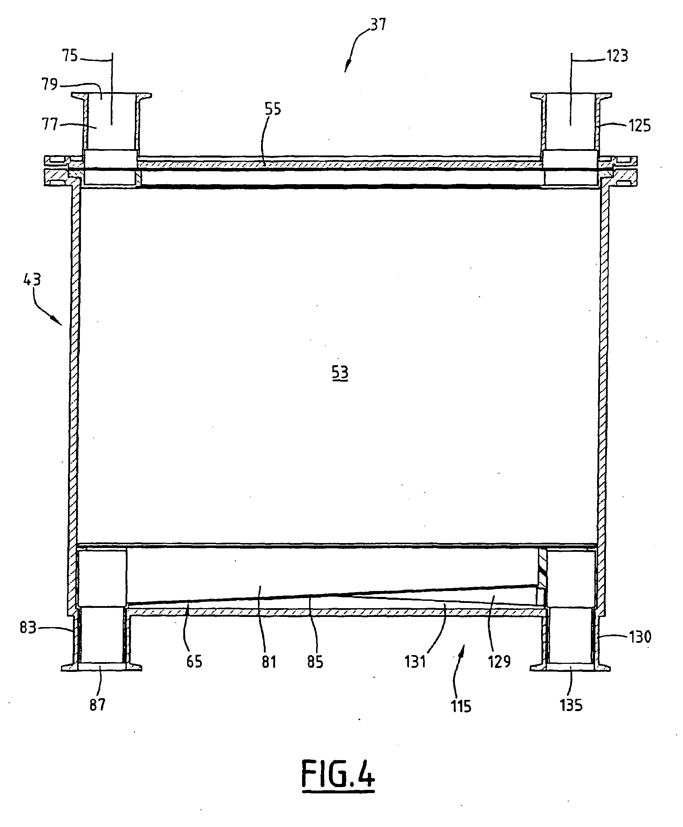

Comme illustré par la Figure 4, chaque réceptacle 81 comprend une paroi de fond 85 inclinée vers le bas et vers la gauche sur la Figure 4, en direction de l'embout d'évacuation 83 dans lequel débouchent tous les réceptacles 81.

L'embout 83 délimite une sortie inférieure aval 87 d'évacuation de fluide réfrigérant liquide. L'embout 83 fait saillie vers le bas à partir d'un bord gauche du boîtier 43 sur la Figure 4. Dans cet exemple, l'embout 83 du collecteur 65 est raccordé à la conduite d'alimentation en fluide réfrigérant liquide 75 par une conduite de recirculation 88 visible sur la Figure 1 et munie d'une pompe (non représentée).

Les moyens de blocage du refoulement 67 comprennent, pour chaque plaque 61, une chemise de cloisonnement 91 enveloppant la plaque 61 et un tampon poreux 93 interposé entre chaque collecteur 65 et le volume 53. Bien entendu entre chaque plaque 61 et chaque chemise de cloisonnement 91 peut figurer des surfaces 73A et 73B selon une des variantes expliquée ci-dessus.

Comme illustré par les Figures 2 et 5, chaque chemise 91 comprend des parois de cloisonnement 95A, 95B appliquées respectivement sur les surfaces de transfert de gaz 73A, 73B et raccordées entre elles par des jupes latérales 97A, 97B attachées entre elles de manière étanche sur les surfaces latérales 74.

Chaque paroi 95A, 95B délimite en regard des surfaces 73A, 73B une pluralité d'ouvertures horizontales 99 s'étendant sensiblement sur toute la largeur de la plaque 61. Chaque paroi 95A, 95B comprend, pour chaque ouverture 99, une ailette 101 inclinée de guidage. La paroi présente ainsi une structure dites en « claires-voies ».

Les ailettes 101 font saillie par rapport à la surface 73A, 73B vers le haut et à l'écart de la surface 73A, 73B en regard de chaque ouverture 99, depuis le bord inférieur définissant chaque ouverture 99. Préférentiellement, l'écartement des ailettes 101 par rapport à chaque surface 73A, 73B est compris entre 0,5 et 5 mm afin de s'adapter à la taille des gouttes qui peuvent se former. Dans le cas de notre exemple, des ailettes 101 dont l'écartement est sensiblement égal à 2 mm et l'épaisseur est sensiblement égale à 1 mm permet de guider la majorité des gouttes.

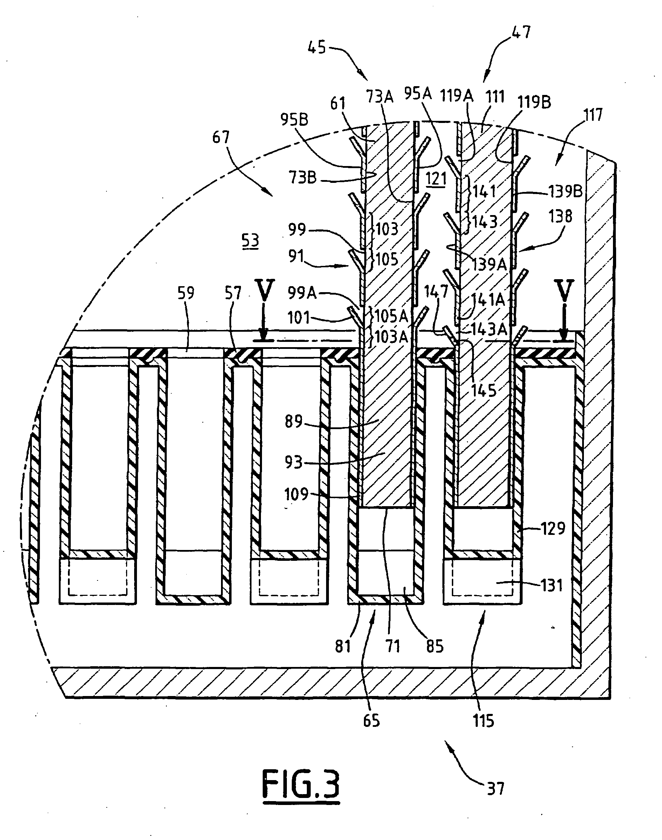

Comme illustré à la figure 3, chaque paroi 95A, 95B délimite ainsi sur la surface 73A, 73B correspondante une pluralité de régions couvertes 103 par la paroi 95A, 95B et une pluralité de régions découvertes 105 de passage de gaz.

A cette Figure 3, on peut voir également une région couverte aval 103A qui s'étend depuis la paroi de fond 57 jusqu'à une première ouverture aval 99A formant la région découverte 105A au-dessus et à l'écart de la paroi de fond 57, pour bloquer le refoulement de fluide réfrigérant liquide depuis le collecteur 65 vers le volume intérieur 53 grâce à l'ailette inclinée de guidage associée 101. La région aval 103A s'étend sur toute la largeur de la plaque 61.

Préférentiellement selon l'invention, chaque paroi 95A, 95B comprend une structure en claires-voies uniquement sur les premières régions aval couverte 103A et découverte 105A qui est utilisée pour guider vers la plaque 61 les éventuelles gouttes présentes sur respectivement les surfaces 73A et 73B. Chaque paroi 95A, 95B comporte, préférentiellement, sur le reste de sa surface, c'est-à-dire jusqu'à la région amont 69, un maillage en polymère par exemple du type alvéolaire dont la configuration et la distribution est adaptée pour rigidifier le corps poreux de chaque plaque 61 en offrant une surface d'ouverture au moins égale à 50 % de chaque surface 73A, 73B.

Chaque paroi 95A, 95B comprend un prolongement supérieur 107 visible sur la Figure 2 et inséré dans le couvercle 55, et un prolongement inférieur 109 visible sur la Figure 3 et interposé entre le réceptacle 81 et la région inférieure 89. de la plaque 61.

Chaque plaque 61 est ainsi calée dans le boîtier 43 par sa chemise de cloisonnement 91.

Chaque tampon poreux 93 est formé par la région 89 de la plaque 61 insérés dans le réceptacle 81. En variante, un tampon poreux 93 est formé dans un matériau distinct de celui de la plaque 61.

L'absorbeur 47 comprend une pluralité de plaques 111, un distributeur 113 de fluide absorbant, et un collecteur 115 de fluide mixte.

L'absorbeur 47 comprend en outre des moyens 117 de blocage du refoulement de fluide mixte dans le volume intérieur 53.

Les plaques 111 peuvent présenter une structure identique à celle des plaques de transfert de gaz 61 et ne seront pas décrites en détail. Elles sont disposées dans le volume intérieur 53, parallèlement aux plaques de transfert 61 et sont montées entourant chaque face de chaque plaque 61. Seules deux plaques 111 aux extrémités du boîtier 43 sont représentées sur la Figure 2.

Les plaques 111 délimitent de part et d'autre de leur épaisseur des surfaces de passage de gaz 119A, 119B respectives. Les surfaces verticales 119A, 119B peuvent comporter un matériau spécifique capable de laisser passer les gaz tout en retenant les liquides. Elles peuvent comporter par exemple un grillage du type inoxydable à trous fins compris entre 0,1 mm et 1 mm de diamètre réalisés avec un fil compris entre 0,01 mm et 1 mm de diamètre. Le diamètre des trous fins est préférentiellement égal ou supérieur à 0,1 mm pour éviter que les sels ne les obstruent. Les surfaces verticales 119A, 119B peuvent également consister en une membrane de type GORE-TEX®, nylon, polyéthylène ou polypropylène. Enfin, il peut être envisagé que les surfaces verticales 119A, 119B résultent d'une modification locale du corps poreux de chaque plaque 111 sur environ 1 mm d'épaisseur en augmentant la densité de pores par centimètre jusqu'à par exemple 100 pores par centimètre et préférentiellement 50 pores par centimètre.

Chaque surface 73A, 73B d'une plaque de transfert 61 est située en regard d'une surface de passage de gaz 119A, 119B d'une plaque 111. Les surfaces 73A, 73B et 119A, 119B délimitent entre elles, avec la paroi de fond 57 et le couvercle 55, une chambre de migration 121 de fluide réfrigérant gazeux depuis la surface 73A, 73B vers la surface 119A, 119B.

Le distributeur 113 de fluide absorbant liquide est ménagé dans le couvercle 55. Le distributeur 113 est raccordé à l'enceinte 39 du générateur 33 par une conduite 123 d'alimentation en fluide absorbant liquide.

Le distributeur 113 comprend un embout 125 de raccordement à la conduite 123, situé sur le bord opposé à l'embout 77 sur le couvercle 55 et des conduits 127 de passage de fluide absorbant liquide raccordant l'embout 125 à un bord supérieur amont de chaque plaque 111.

Le collecteur 115 comprend, pour chaque plaque 111, un réceptacle 129 de collecte de fluide mixte liquide et un embout d'évacuation 130 de fluide mixte commun à tous les réceptacles 129.

Chaque réceptacle 129 présente une structure analogue aux réceptacles 81 du collecteur 65 de fluide réfrigérant liquide. Les réceptacles 129 sont ainsi fixés sous la paroi de fond 57 et présentent une ouverture de passage de la plaque 111.

Les réceptacles 81 de fluide réfrigérant liquide et les réceptacles 129 de fluide mixte liquide sont espacés en se déplaçant transversalement le long d'un axe horizontal perpendiculaire aux plaques 111 et 61, de gauche à droite sur les Figures 2 et 3.

Dans le mode de réalisation de la Figure 2, le collecteur 115 de fluide absorbant et le collecteur 65 de fluide réfrigérant sont venus de matière.

Comme illustré par la Figure 4, chaque réceptacle 129 présente une paroi de fond 131 inclinée vers l'embout d'évacuation de fluide mixte 130.

L'embout d'évacuation de fluide mixte 130 fait saillie vers la bas à partir du bord droit du boîtier 43 sur la Figure 4, à l'opposé de l'embout d'évacuation de fluide réfrigérant 83. L'embout 130 délimite une sortie 135 d'évacuation de fluide mixte.

Les inclinaisons vers le bas des parois de fond respectives 85 et 131 des réceptacles 81 de fluide réfrigérant liquide et des réceptacles 129 de fluide mixte sont dirigées dans des directions opposées pour guider respectivement le fluide réfrigérant liquide et le fluide mixte vers les embouts respectifs 83, 130.

Le collecteur 115 est raccordé à l'enceinte 39 du générateur 33 par une conduite de recirculation 137 de fluide mixte raccordé sur l'embout 130.

Les moyens de blocage 117 du refoulement de fluide mixte comprennent, pour chaque plaque 111, une chemise de couverture 138. de structure analogue à la chemise 91 de cloisonnement des plaques 61. Les chemises 138 ne seront donc pas décrites en détail.

Chaque chemise 138 comprend deux parois 139 de couverture des surfaces respectives 119A, 119B, présentant des ouvertures horizontales, pour former une structure dites de « claires-voies ». Les parois 139 délimitent sur chaque surface 139A, 139B des régions couvertes 141 et des régions découvertes 143 s'étendant horizontalement.

Chaque région découverte 105 d'une surface 73A, 73B est située en regard d'une région couverte 141 d'une surface 119A, 119B. De même chaque région découverte 143 d'une surface 119A,119B est située en regard d'une région couverte 103 d'une surface 73A, 73B.

En outre, une région découverte aval 143A s'étend vers le haut sur chaque surface 119A, 119B depuis la paroi de fond 57 jusqu'à une première région couverte 141A.

Comme illustré par la Figure 5, des ouvertures traversantes 145 affleurant la paroi de fond 57 sont ménagées dans les bords latéraux des ailettes 147 couvrant la région découverte aval 143A.

Ainsi, le liquide collecté sur la paroi de fond 57 du volume 53 peut être évacué à travers les ouvertures 145 vers le collecteur 115 de fluide mixte.

Préférentiellement selon l'invention, chaque paroi 139A, 139B comprend une structure en claires-voies uniquement sur la première région aval découverte 143A qui est utilisée pour guider vers la plaque 111 les éventuelles gouttes présentes sur respectivement les surfaces 119A et 119B. Chaque paroi 139A, 139B comporte, préférentiellement, sur le reste de sa surface, un maillage en polymère par exemple du type alvéolaire dont la configuration et la distribution est adaptée pour rigidifier le corps poreux de chaque plaque 111 en offrant une surface d'ouverture au moins égale à 50 % de chaque surface 119A, 119B. Seule la région découverte aval 143 de chaque paroi 139 est alors en regard de la région couverte aval 103 de chaque paroi 95, la région découverte 105 de chaque paroi 95 étant alors en face dudit maillage par exemple du type alvéolaire de chaque paroi 143.

En référence à la Figure 1, le circuit de réfrigération 49 comprend une conduite de circulation 151 d'un fluide caloporteur, une pompe 153 et un premier échangeur thermique 155, montés d'amont en aval sur la conduite 151.

La conduite 151 comprend une région 157 d'échange thermique avec chaque plaque 61, cette région pouvant être formée par des conduits verticaux ménagés dans les plaques 61.

En variante, la conduite de circulation 151 est formée par la conduite 88 de recirculation de fluide réfrigérant liquide. Dans ce cas, le fluide réfrigérant liquide forme le fluide caloporteur et le premier échangeur 155 est monté sur la conduite 88.

Le premier échangeur de chaleur 155 est disposé à l'extérieur de l'ensemble évaporateur/absorbeur 37, en relation d'échange thermique avec l'ensemble de climatisation 17.

Le circuit de refroidissement 51 comprend une conduite 159 de circulation d'un fluide de refroidissement, une pompe 161 et un deuxième échangeur de chaleur 163, montés d'amont en aval sur la conduite 159.

La conduite 159 comprend une région 165 d'échange thermique avec chaque plaque 111 formée par exemple par des conduits ménagés verticalement dans les plaques 111.

En variante, la conduite 159 est formée par une partie amont de la conduite d'évacuation 137 de fluide mixte. Le fluide de refroidissement est alors formé par une partie du fluide mixte qui est réintroduit dans l'absorbeur 47 via une conduite de dérivation débouchant en amont de l'embout 125 sur la conduite 123.

Le deuxième échangeur de chaleur 163 est monté sur la face avant du véhicule en amont du radiateur.

Le fonctionnement du dispositif de refroidissement 11 selon l'invention, pour la climatisation de l'habitacle 15 d'un véhicule automobile va maintenant être décrit.

Initialement, le générateur 33 contient une quantité de fluide mixte suffisante pour immerger la région 42 des moyens de chauffage 41.

Sous l'effet du chauffage par la région 42, le fluide mixte liquide est séparé en un courant gazeux de fluide réfrigérant et un fluide absorbant liquide. Le courant gazeux de fluide réfrigérant est alors collecté dans la conduite de passage 47, puis condensé dans le condenseur 35 pour former un courant de fluide réfrigérant liquide. Ce courant est introduit dans l'évaporateur 45 à travers la conduite 75 d'alimentation en fluide réfrigérant. Le fluide réfrigérant liquide est ainsi introduit dans l'entrée d'alimentation 79, puis réparti entre les différentes plaques 61 à travers le distributeur 63.

Le fluide réfrigérant liquide mouille alors les surfaces 73A, 73B depuis le bord amont supérieur 69 jusqu'au bord aval inférieur 71. La présence de la chemise de cloisonnement 91 permet de contenir le fluide réfrigérant liquide dans la plaque 61 même si des variations de débit et/ou d'inclinaison de l'ensemble 37 se produisent, lorsque le véhicule est en circulation.

Une partie du fluide réfrigérant liquide s'évapore sur les régions découvertes 99 des surfaces 73A, 73B, ce qui produit des frigories qui sont collectées par échange thermique avec le fluide caloporteur circulant dans le circuit de réfrigération 49. Ces frigories sont transmises au premier échangeur de chaleur 155 par circulation du fluide caloporteur depuis la région d'échange thermique 157.

Le fluide réfrigérant liquide est alors collecté dans les réceptacles 81 et s'écoule vers l'embout de sortie 83, guidé par la pente inclinée de la paroi de fond 85 des réceptacles 81.

La présence d'un tampon poreux 93, formé par la région aval 89 de la plaque 61 interposée dans le réceptacle 81 évite le refoulement du fluide réfrigérant liquide contenu dans le réceptacle 81 vers le volume 53.

En outre, la présence d'une région couverte 103A par la surface 73A s'étendant entre la paroi de fond 57 et une première ouverture 99A limite également le risque de refoulement de fluide réfrigérant liquide depuis le collecteur 65 dans le volume 53.

Simultanément, le courant de fluide absorbant liquide est amené depuis l'enceinte 39 vers l'absorbeur 47 à travers la conduite d'alimentation en fluide réfrigérant liquide 123. Ce courant est introduit à travers l'embout 125 et est distribué entre les différentes plaques 111 par le distributeur 113. Le courant de fluide absorbant liquide s'écoule depuis le bord supérieur des plaques 111 vers le bord inférieur de ces plaques 111.

La présence de la chemise de couverture 138 autour des plaques 111 contient le fluide absorbant dans les plaques 111 lors de sa circulation depuis le bord supérieur de chaque plaque 111 vers le bord inférieur.

Au niveau des régions découvertes 143 de la surface 119A, le fluide absorbant liquide collecte le fluide réfrigérant gazeux qui migre par la chambre 121 depuis la surface 73A en regard.

Le fluide mixte liquide est donc formé dans les plaques 111 et collecté dans les collecteurs de fluide mixte 129, puis évacué vers l'embout d'évacuation de fluide mixte 130 en étant guidé par l'inclinaison vers le bas des parois de fond 131 à l'opposé de l'embout d'évacuation de fluide réfrigérant 83. Le fluide mixte liquide circulant dans les plaques 111 est refroidi par circulation du fluide caloporteur dans la région 165 d'échange thermique du circuit de refroidissement 51.

Le fluide mixte récupéré dans le réceptacle 129 est alors réintroduit dans le générateur 33 par la conduite 137.

L'espace entre les réceptacles 81 de fluide réfrigérant qui présentent une température relativement plus basse, et les réceptacles 129 de fluide mixte qui présentent une température relativement plus haute, isole thermiquement ces réceptacles entre eux.

Par ailleurs, si un liquide est présent dans le fond du volume 53, ce liquide est évacué dans les réceptacles 129 du collecteur de fluide mixte 115 à travers les ouvertures traversantes 147. La paroi aval 103A empêche ce liquide de s'écouler dans le collecteur 65 de fluide réfrigérant liquide.

Le risque de contamination du fluide réfrigérant liquide qui circule dans les plaques de transfert 61 est ainsi limité, et ce même si l'ensemble 37 subit des accélérations et/ou est incliné lors du déplacement du véhicule automobile.

## Revendications

1. Ensemble (37) évaporateur/absorbeur du type comprenant :
- un évaporateur (45) de fluide réfrigérant liquide présentant une entrée amont (79) d'alimentation en fluide réfrigérant liquide,
- un absorbeur (47) de fluide réfrigérant gazeux raccordé à l'évaporateur (45) et présentant une entrée amont (125) d'alimentation en fluide absorbant liquide ;
**caractérisé en ce que** l'ensemble (37) délimite une chambre (121) de migration de fluide réfrigérant gazeux définie par au moins une surface (73A, 73B) de transfert du gaz de fluide réfrigérant située sur l'évaporateur (45) et raccordée en amont à l'entrée d'alimentation en fluide réfrigérant (79), par au moins une surface (119A, 119B) de passage de fluide réfrigérant évaporé située sur l'absorbeur (47) en regard de la ou de chaque surface de transfert (73A, 73B) et raccordée en amont à l'entrée d'alimentation en fluide absorbant (125), et par une paroi de fond (57) reliant lesdites surfaces (73A, 73B), l'évaporateur (45) comprenant :
- un collecteur (65) de fluide réfrigérant liquide raccordé à la ou à chaque surface de transfert (73A, 73B) pour recueillir le fluide réfrigérant liquide en aval de la ou de chaque surface de transfert (73A, 73B) ; et
- des moyens (91) de cloisonnement disposés dans la chambre (121) et délimitant sur la ou chaque surface de transfert (73A, 73B) au moins une région couverte (103) par les moyens de cloisonnement et au moins une région découverte (105) de transfert.

2. Ensemble (37) selon la revendication 1, **caractérisé en ce que** les moyens de cloisonnement (91) délimitent sur la ou chaque surface de transfert (73A, 73B) une région aval (103A) couverte s'étendant transversalement sur toute la largeur de la surface de transfert (73A, 73B) et s'étendant à partir de la paroi de fond (57) jusqu'à une région découverte (105A) de transfert située à l'écart et au dessus de la paroi de fond (57).

3. Ensemble (17) selon la revendication 2, **caractérisé en ce que** les moyens de cloisonnement (91) comportent sur le reste de la ou de chaque surface de transfert (73A, 73B) un maillage de rigidification sensiblement au-dessus de ladite région découverte (105A) afin de maximiser le pourcentage surfacique d'ouverture.

4. Ensemble (17) selon la revendication 1 ou 2, **caractérisé en ce que** l'entrée d'alimentation en fluide réfrigérant (79) est raccordée à un bord amont (69) de la ou de chaque surface de transfert (73A, 73B), les moyens de cloisonnement (91) délimitant sur la surface de transfert (73A, 73B) une alternance de régions couvertes (103) et de régions découvertes (105) de transfert entre la paroi de fond (57) et le bord amont (69).

5. Ensemble (37) selon l'une quelconque des revendications précédentes, **caractérisé en ce que** les moyens de cloisonnement (91) comprennent, en regard de la ou de chaque région découverte (105), une ailette (101) de guidage qui fait saillie à l'écart de la surface de transfert (73A, 73B).

6. Ensemble (37) selon la revendication 5, **caractérisé en ce que** chaque ailette (101) de guidage est écartée de surface de transfert (73A, 73B) d'une distance comprise entre 0,5 et 5 mm afin de s'adapter à la taille des gouttes qui peuvent se former.

7. Ensemble (37) selon l'une quelconque des revendications précédentes, **caractérisé en ce que** l'évaporateur (45) comprend au moins un corps (61) délimitant deux surfaces de transfert (73A, 73B) opposées reliées entre elles par des surfaces latérales (74), les moyens de cloisonnement (91) s'étendant de manière étanche sur les surfaces latérales (74).

8. Ensemble (37) selon l'une quelconque des revendications précédentes, **caractérisé en ce qu'**il comprend un bloc poreux (93) interposé entre le collecteur de fluide réfrigérant (65) et la ou chaque surface de transfert (73A, 73B).

9. Ensemble (37) selon l'une quelconque des revendications précédentes, **caractérisé en ce que** le collecteur de fluide réfrigérant (65) est situé sous la paroi de fond (57) et est appliqué sous la paroi de fond (57).

10. Ensemble (37) selon l'une quelconque des revendications précédentes, **caractérisé en ce que** l'absorbeur (47) comprend :
- un collecteur (115) d'un fluide mixte liquide formé par un mélange de fluide absorbant et de fluide réfrigérant, raccordé à la ou à chaque surface de passage (119A, 119B) pour recueillir le fluide mixte en aval de la ou de chaque surface de passage (119A, 119B) ; et
- au moins une paroi de couverture (138) de la ou de chaque surface de passage (119A, 119B) délimitant sur la ou chaque surface de passage (119A, 119B) au moins une région découverte (143A) aval s'étendant depuis la paroi de fond (57), la région découverte aval (143A) débouchant dans la chambre (121).

11. Ensemble (17) selon la revendication 10, **caractérisé en ce que** la paroi de couverture (138) comporte sur le reste de la ou de chaque surface de passage (119A, 119B) un maillage de rigidification sensiblement au-dessus de ladite région découverte aval (143A) afin de maximiser le pourcentage surfacique d'ouverture.

12. Ensemble (37) selon la revendication 10, **caractérisé en ce que** la paroi de couverture (138) comporte au moins une région couverte (141) au-dessus de la région découverte aval (143A).

13. Ensemble (37) selon l'une des revendications 10 à 12, **caractérisé en ce que** la ou chaque région découverte de passage (143) est située en regard d'une région couverte (103) de la surface de transfert (73A, 73B).

14. Ensemble (37) selon l'une des revendications 12 à 13, **caractérisé en ce que** la ou chaque région découverte (105) de la surface de transfert (73A, 73B) est située en regard d'une région couverte (141) de la surface de passage (119A, 119B).

15. Ensemble (37) selon l'une des revendications 10 à 14, **caractérisé en ce que** la région découverte aval (143A) débouchant dans la chambre (121) comporte une ouverture de collecte (145) affleurant la paroi de fond (57) afin de vider les fluides liquides présents sur la paroi de fond (57) dans le collecteur (115).

16. Ensemble (37) selon l'une des revendications 10 à 15, **caractérisé en ce que** le collecteur de fluide réfrigérant (65) comprend au moins un réceptacle (81) de fluide réfrigérant (65) présentant un fond (85) incliné dans une première direction vers une sortie (87) d'évacuation de fluide réfrigérant liquide, le collecteur de fluide mixte (115) comprenant au moins un réceptacle (129) de fluide mixte liquide présentant un fond (131) incliné dans une deuxième direction distincte de la première direction, vers une sortie (135) d'évacuation de fluide mixte

17. Ensemble (37) selon l'une quelconque des revendications précédentes, **caractérisé en ce que** les moyens de cloisonnement (91) disposés dans la chambre comprennent une paroi de cloisonnement (95A) appliquée sur la surface de transfert de gaz (73A, 73B), la ou chaque paroi de cloisonnement (95A, 95B) délimitant ainsi sur la surface de transfert (73A, 73B) la ou chaque région couverte (103) et la ou chaque région découverte (105) de passage de gaz.

18. Dispositif (11) de refroidissement par absorption, du type comprenant :
- un générateur (33) de fluide réfrigérant et de fluide absorbant par séparation d'un fluide mixte ;
- un condenseur (35) de fluide réfrigérant, raccordé au générateur (33) ;
- un ensemble (37) évaporateur/absorbeur selon l'une quelconque des revendications précédentes, l'évaporateur (45) étant raccordé au condenseur (35) par une conduite (75) d'alimentation en fluide réfrigérant débouchant dans l'entrée d'alimentation (77) en fluide réfrigérant, l'absorbeur (47) étant raccordé au générateur (33) par une conduite (123) d'alimentation en fluide absorbant débouchant dans l'entrée (125) d'alimentation en fluide absorbant et par une conduite (137) d'évacuation de fluide mixte ; et
- un circuit (51) de réfrigération à base d'un fluide caloporteur, placé en relation d'échange thermique avec la ou chaque surface de transfert (73A, 73B), le circuit de réfrigération (51) comprenant un premier échangeur (155) de chaleur situé hors de l'évaporateur (45).

19. Véhicule automobile, **caractérisé en ce qu'**il comprend un dispositif (11) selon la revendication 18.

## Claims

1. Evaporator/absorber combination (37) of the type comprising:
- an evaporator (45) for liquid coolant fluid, having an upstream inlet (79) for the supply of liquid coolant fluid,
- an absorber (47) of gaseous coolant fluid connected to the evaporator (45) and having an upstream inlet (125) for the supply of liquid absorbent fluid;
**characterised in that** the combination (37) delimits a chamber (121) for the migration of gaseous coolant fluid defined by at least one surface (73A, 73B) for the transfer of gaseous coolant fluid located on the evaporator (45) and connected upstream of the coolant fluid supply inlet (79), by at least one transit surface (119A, 119B) for evaporated coolant fluid, which is located on the absorber (47) opposite the or each transfer surface (73A, 73B) and connected upstream of the absorbent fluid supply inlet (125), and by a base wall (57) connecting the said surfaces (73A, 73B), the evaporator (45) comprising:
- a collector (65) of liquid coolant fluid connected to the or each transfer surface (73A, 73B) for collecting the liquid coolant fluid downstream of the or each transfer surface (73A, 73B); and
- partitioning means (91) located in the chamber (121) and delimiting, on the or each transfer surface (73A, 73B), at least one region (103) that is covered by the partitioning means and an least one uncovered transfer region (105).

2. Combination (37) according to claim 1, **characterised in that** the partitioning means (91) delimit, on the or each transfer surface (73A, 73B), a covered downstream region (103A) extending transversely over the entire width of the transfer surface (73A, 73B) and extending from the base wall (57) to an uncovered transfer region (105A) located at a spacing from and above the base wall (57).

3. Combination (17) according to claim 2, **characterised in that** the partitioning means (91) comprise, over the remainder of the or each transfer surface (73A, 73B), a reinforcing mesh substantially above said uncovered region (105A) so as to maximise the percentage surface area of opening.

4. Combination (17) according to claim 1 or 2, **characterised in that** the coolant fluid supply inlet (79) is connected to an upstream edge (69) of the or each transfer surface (73A, 73B), the partitioning means (91) delimiting, on the transfer surface (73A, 73B), an alternating arrangement of covered regions (103) and uncovered regions (105) for transfer between the base wall (57) and the upstream edge (69).

5. Combination (37) according to any one of the preceding claims, **characterised in that** the partitioning means (91) comprise, opposite the or each uncovered region (105), a guide fin (101) which projects away from the transfer surface (73A, 73B).

6. Combination (37) according to claim 5, **characterised in that** each guide fin (101) is spaced from the transfer surface (73A, 73B) by a distance of between 0.5 and 5 mm so as to adapt to the size of the droplets that may be formed.

7. Combination (37) according to any one of the preceding claims, **characterised in that** the evaporator (45) comprises at least one body (61) that delimits two opposing transfer surfaces (73A, 73B) connected to one another by lateral surfaces (74), the partitioning means (91) extending in leaktight manner over the lateral surfaces (74).

8. Combination (37) according to any one of the preceding claims, **characterised in that** it comprises a porous block (93) interposed between the coolant fluid collector (65) and the or each transfer surface (73A, 73B).

9. Combination (37) according to any one of the preceding claims, **characterised in that** the coolant fluid collector (65) is located under the base wall (57) and is pressed underneath the base wall (57).

10. Combination (37) according to any one of the preceding claims, **characterised in that** the absorber (47) comprises:
- a collector (115) of a mixed liquid fluid formed by mixing absorbent fluid and coolant fluid, connected to the or each transit surface (119A, 119B) for collecting the mixed fluid downstream of the or each transit surface (119A, 119B); and
- at least one covering wall (138) for the or each transit surface (119A, 119B) delimiting on the or each transit surface (119A, 119B) at least one downstream uncovered region (143A) extending from the base wall (57), the downstream uncovered region (143A) terminating in the chamber (121).

11. Combination (17) according to claim 10, **characterised in that** the covering wall (138) comprises over the remainder of the or each transit surface (119A, 119B) a reinforcing mesh substantially above said downstream uncovered region (143A) so as to maximise the percentage surface area of opening.

12. Combination (37) according to claim 10, **characterised in that** the covering wall (138) comprises at least one covered region (141) above the downstream uncovered region (143A).

13. Combination (37) according to one of claims 10 to 12, **characterised in that** the or each uncovered transit region (143) is located opposite a covered region (103) of the transfer surface (73A, 73B).

14. Combination (37) according to one of claims 12 to 13, **characterised in that** the or each uncovered region (105) of the transfer surface (73A, 73B) is located opposite a covered region (141) of the transit surface (119A, 119B).

15. Combination (37) according to one of claims 10 to 14, **characterised in that** the downstream uncovered region (143A) terminating in the chamber (121) comprises a collecting opening (145) flush with the base wall (57) for the purpose of emptying the liquid fluids present on the base wall (57) into the collector (115).

16. Combination (37) according to one of claims 10 to 15, **characterised in that** the coolant fluid collector (65) comprises at least one receptacle (81) for coolant fluid (65) having a base (85) sloping in a first direction towards an evacuation outlet (87) for liquid coolant fluid, the mixed fluid collector (115) comprising at least one receptacle (129) for mixed liquid fluid having a base (131) sloping in a second direction that is distinct from the first direction, towards an evacuation outlet (135) for mixed fluid.

17. Combination (37) according to any one of the preceding claims, **characterised in that** the partitioning means (91) arranged in the chamber comprise a partition wall (95A) pressed against the gas transfer surface (73A, 73B), the or each partition wall (95A, 95B) thus delimiting on the transfer surface (73A, 73B) the or each covered region (103) and the or each uncovered region (105) for gas transit.

18. Apparatus (11) for cooling by absorption, of the type comprising:
- a generator (33) of coolant fluid and absorbent fluid by separation of a mixed fluid;
- a condenser (35) of coolant fluid, connected to the generator (33);
- an evaporator/absorber combination (37) according to any one of the preceding claims, the evaporator (45) being connected to the condenser (35) by a coolant fluid supply duct (75) opening into the coolant fluid supply inlet (77), the absorber (47) being connected to the generator (33) by an absorbent fluid supply duct (123) opening into the absorbent fluid supply inlet (125) and by a mixed fluid evacuation duct (137); and
- a cooling circuit (51) based on a heat-exchange fluid, arranged in heat exchange relationship with the or each transfer surface (73A, 73B), the cooling circuit (51) comprising a first heat exchanger (155) located outside the evaporator (45).

19. Automotive vehicle, **characterised in that** it comprises an apparatus (11) according to claim 18.

## Patentansprüche

1. Verdampfer-/Absorber-Kombination (37), die folgendes aufweist:
- einen Verdampfer (45) für flüssigem Kühlmittel, der einen vorgelagerten Eintritt (79) für die Zufuhr des flüssigen Kühlmittels besitzt,
- einen Absorber (47) für gasförmigem Kühlmittel, der mit dem Verdampfer (45) verbunden ist, und einen vorgelagerten Eintritt (125) für die Zufuhr der Absorptionsflüssigkeit besitzt ;
**dadurch gekennzeichnet, dass**
die Kombination (37) eine Kammer (121) für den Übergang des gasförmigen Kühlmittels begrenzt, die durch mindestens eine Übergangsfläche (73A, 73B) für das Gas des Kühlmittels definiert ist, welche an dem Verdampfer (45) angeordnet ist und vorgelagert am Eintritt für die Kühlmittelzufuhr (79) angeschlossen ist, und zwar durch mindestens eine Durchgangsfläche (119A, 119B) des verdampften Kühlmittels, die sich an dem Absorber (47) gegenüber der oder jeder Übergangsfläche (73A, 73B) befindet, und vorgelagert am Eintritt (125) für die Zufuhr der Absorptionsflüssigkeit angeschlossen ist, und durch eine Rückwand (57), welche die Flächen (73A, 73B) des Verdampfers (45) miteinander verbindet, und folgendes aufweist
- einen Sammler (65) für das flüssige Kühlmittel, der mit der oder jeder Übergangsfläche (73A, 73B) verbunden ist, um das flüssige Kühlmittel hinter der oder jeder Übergangsfläche (73A, 73B) aufzunehmen ; und
- Abschottungsmittel (91), die in der Kammer (121) angeordnet sind, und die an der oder an jeder Übergangsfläche (73A, 73B) mindestens einen von den Abschottungsmitteln bedeckten Bereich (103) und mindestens einen unbedeckten Übergangsbereich (105) begrenzen.

2. Kombination (37) nach Anspruch 1, **dadurch gekennzeichnet, dass** die Abschottungsmittel (91) an der oder an jeder Übergangsfläche (73A, 73B) einen nachgeordneten, bedeckten Bereich (103A) begrenzen, der quer zu der gesamten Breite der Übergangsfläche (73A, 73B) verläuft, und sich von der Rückwand (57) bis zu dem unbedeckten Übergangsbereich (105A) erstreckt, der in einem Abstand zu und oberhalb der Rückwand (57) angeordnet ist.

3. Kombination (37) nach Anspruch 2, **dadurch gekennzeichnet, dass** die Abschottungsmittel (91) an dem Rest der oder jeder Übergangsfläche (73A, 73B) im wesentlichen oberhalb des unbedeckten Übergangsbereiches (105A) eine Vermaschung zur Verstärkung aufweisen, um den Prozentsatz der Oberfläche der Öffnung zu maximieren.

4. Kombination (37) nach Anspruch 1 oder 2, **dadurch gekennzeichnet, dass** der Eintritt für die Zufuhr des Kühlmittels (79) mit einem vorgelagerten Rand (69) der oder jeder Übergangsfläche (73A, 73B) verbunden ist, wobei die Abschottungsmittel (91) an der Übergangsfläche (73A, 73B) einen Wechsel von bedeckten (103) und unbedeckten Übergangsbereichen (105) zwischen der Rückwand (57) und dem vorgelagerten Rand (69) begrenzen.

5. Kombination (37) nach einem der vorhergehenden Ansprüche, **dadurch gekennzeichnet, dass** die Abschottungsmittel (91) gegenüber dem oder jedem unbedeckten Übergangsbereich (105) eine Führungsflosse (101) aufweisen, die in einem Abstand zu der Übergangsfläche (73A, 73B) vorsteht.

6. Kombination (37) nach Anspruch 5, **dadurch gekennzeichnet, dass** jede Führungsflosse (101) in einem Abstand zwischen 0,5 mm und 5 mm von der Übergangsfläche (73A, 73B) entfernt angeordnet ist, um sich an die Größe der Tropfen anzupassen, die sich bilden können.

7. Kombination (37) nach einem der vorhergehenden Ansprüche, **dadurch gekennzeichnet, dass** der Verdampfer (45) mindestens ein Gehäuse (61) umfasst, das zwei gegenüberliegende Übergangsflächen (73A, 73B) begrenzt, die durch Mantelflächen (74) miteinander verbunden sind, wobei die Abschottungsmittel (91) dicht an den Mantelflächen (74) verlaufen.

8. Kombination (37) nach einem der vorhergehenden Ansprüche, **dadurch gekennzeichnet, dass** sie einen porösen Block (93) besitzt, der zwischen dem Kühlmittelsammler (65) und jeder Übergangsfläche (73A, 73B) eingeschoben ist.

9. Kombination (37) nach einem der vorhergehenden Ansprüche, **dadurch gekennzeichnet, dass** der Kühlmittelsammler (65) unter der Rückwand (57) angeordnet ist, und unter der Rückwand (57) befestigt ist.

10. Kombination (37) nach einem der vorhergehenden Ansprüche, **dadurch gekennzeichnet, dass** der Absorber (47) folgendes besitzt:
- einen Sammler (115) für eine Mischflüssigkeit, die aus einer Mischung einer Absorptionsflüssigkeit und einer Kühlflüssigkeit gebildet ist, der mit der oder jeder Durchgangsfläche (119A, 119B) verbunden ist, um die Mischflüssigkeit hinter der oder jeder Durchgangsfläche (119A, 119B) aufzunehmen ; und
- mindestens eine Wandabdeckung (138) der oder jeder Durchgangsfläche (119A, 119B) an der oder jeder Durchgangsfläche (119A, 119B) mindestens einen nachgeordneten unbedeckten Bereich (143A) begrenzt, der sich von der Rückwand (57) aus erstreckt, wobei der nachgeordnete freie bzw. unbedeckte Bereich (143A) in die Kammer (121) mündet.

11. Kombination (37) nach Anspruch 10, **dadurch gekennzeichnet, dass** die Wandabdeckung (138) an dem Rest der oder jeder Durchgangsfläche (119A, 119B) im wesentlichen oberhalb des nachgeordneten unbedeckten Bereiches (143A) eine Vermaschung zur Verstärkung aufweist, um den Prozentsatz der Oberfläche der Öffnung zu maximieren.

12. Kombination (37) nach Anspruch 10, **dadurch gekennzeichnet, dass** die Wandabdeckung (138) oberhalb des nachgeordneten freien bzw. unbedeckten Bereiches (143A) mindestens einen bedeckten Bereich (141) besitzt.

13. Kombination (37) nach einem der Ansprüche 10 bis 12, **dadurch gekennzeichnet, dass** der unbedeckte Übergangsbereich (143) gegenüber einem bedeckten Bereich (103) der Übergangsfläche (73A, 73B) angeordnet ist.

14. Kombination (37) nach einem der Ansprüche 12 bis 13, **dadurch gekennzeichnet, dass** der oder jeder unbedeckte Bereich (105) der Übergangsfläche (73A, 73B) gegenüber einem bedeckten Bereich (141) der Durchgangsfläche (119A, 119B) angeordnet ist.

15. Kombination (37) nach einem der Ansprüche 10 bis 14, **dadurch gekennzeichnet, dass** der nachgeordnete unbedeckte Bereich (143A), der in die Kammer (121) mündet, eine Sammelöffnung (145) besitzt, die mit der Rückwand (57) fluchtet, um die Flüssigkeiten, die sich an der Rückwand (57) befinden, in den Sammler (115) auszuleeren.

16. Kombination (37) nach einem der Ansprüche 10 bis 15, **dadurch gekennzeichnet, dass** der Kühlmittelsammler (65) mindestens einen Auffangbehälter (81) für das Kühlmittel (65) besitzt, der einen Boden (85) aufweist, welcher in eine erste Richtung zu einem Austritt (87) für den Abzug des flüssigen Kühlmittels hin geneigt ist, wobei der Sammler für die Mischflüssigkeit (115) mindestens einen Auffangbehälter (129) für die Mischflüssigkeit besitzt, der einen Boden (131) aufweist, welcher in eine zweite Richtung - getrennt von der ersten Richtung - zu einem Austritt (135) für den Abzug der Mischflüssigkeit hin geneigt ist.

17. Kombination (37) nach einem der vorhergehenden Ansprüche, **dadurch gekennzeichnet, dass** die Abschottungsmittel (91), die in der Kammer angeordnet sind, eine Trennwand (95A) besitzen, die an der Gas-Übergangsfläche (73A, 73B) befestigt ist, wobei die oder jede Trennwand (95A, 95B) auf diese Weise den oder jeden bedeckten Gas-Durchgangsbereich (103) und den oder jeden unbedeckten Gas-Durchgangsbereich (105) an der Übergangsfläche (73A, 73B) begrenzt.

18. Absorptionskühlvorrichtung (11), die folgendes aufweist:
- einen Kühlflüssigkeitsgenerator und Absorptionsflüssigkeitsgenerator (33) durch Trennung einer Mischflüssigkeit ;
- einen Kühlflüssigkeitskondensator (35), der mit dem Generator (33) verbunden ist ;
- eine Verdampfer-/Absorber-Kombination (37) nach einem der vorhergehenden Ansprüche, wobei der Verdampfer (45) über eine Kühlflüssigkeits-Zufuhrleitung (75) mit dem Kondensator (35) verbunden ist, und die Zufuhrleitung in den Eintritt für die Zufuhr (77) der Kühlflüssigkeit mündet, wobei der Absorber (47) über eine Absorptionsflüssigkeits-Zufuhrleitung (123) mit dem Generator (33) verbunden ist, die in den Eintritt (125) für die Zufuhr der Absorptionsflüssigkeit mündet, sowie über eine Leitung (137) zum Abzug der Mischflüssigkeit ; und
- einen Kühlkreislauf (51) auf der Basis eines Wärmeübertragungsmittels, der in Bezug auf den Wärmeaustausch mit der oder jeder Übergangsfläche (73A, 73B) eingesetzt wird, wobei der Kühlkreislauf (51) einen ersten Wärmetauscher (155) besitzt, der außerhalb des Verdampfers (45) angeordnet ist.

19. Kraftfahrzeug, **dadurch gekennzeichnet, dass** es eine Vorrichtung (11) nach Anspruch 18 besitzt.
